# EUROPEAN PATENT APPLICATION

(11) **EP 1 640 991 A1**
(43) Date of publication of application: **29.03.2006**
(21) Application number: 04077654.4
(22) Date of filing: 27.09.2004
(51) Int. Cl.: G11B 33/04

(54) **Container, system and method for holding a stack of discs, e.g. CDs or DVDs**

(71) Applicant: Moser Baer India Ltd., Greater Noida, U.P. 201306 (IN)
(72) Inventor: Nyati, G.R., Noida, Uttar Pradesh (IN); Kapur, Arun, Delhi - 110 088 (IN)
(74) Representative: Plougmann & Vingtoft A/S

(57) **Abstract**

The present invention involves a container, system and method pertaining to loading and storing discs, such as CDs and DVDs. One object of the invention is to provide more space efficient storage of discs. Another object is to provide a simple container. The system according to the invention comprises a container and guiding means (8), said container being adapted for holding a stack of discs (2), said discs including a type such as CDs, DVDs, or similar information storing devices or recordable devices etc., and said container comprising an upwardly extending post (4) having a cross section substantially conforming to central openings formed in said discs, said post comprising an upwardly positioned receiving end, characterised in that the guiding means is detachably connected to the receiving end of the post as well as includes a generally tapered design adapted for guidance of discs onto said post in a loading situation. It has been realised that by implementing a guiding means which is detachably connected to the post, the guiding means may perform the desired function in a loading situation, but may at a suitable instance be detached before the container is sealed. When the guiding means is detached, a seal or lid may be placed very close to or in contact with the stack of discs, whereby loss of space is essentially avoided or at least significantly reduced.

## Description

The present invention involves a container, system and method pertaining to loading and storing discs, such as CDs and DVDs.

European patent application EP 0964402 A2 relates to a disc medium accommodating case for conveying a large number of disc media. The case includes a disc-like case bottom plate member having a diameter that is larger than the outer diameter of the disc media. A stacking column is embedded at the centre of the case bottom plate member in an erect position. A protective cover member is formed as a truncated cone and is placed on the case bottom plate member. A cap fastens the protective cover member to the case bottom plate member by being screwed onto a threaded upper part of the stacking column and against the cover member. When a plurality of such cases is to be stored or transported, it would of course be ideal if the cases had substantially the same size as the discs.
However, in this case a significant amount of space is lost due to the use of the cap.

A more space efficient design is known from US Patent 4,516,678, which relates to a canister for holding a stack of floppy discs. The canister comprises a base and a deep cup-shaped cover, which latches to the base during storage or shipment. Also in this case space is lost, here in the region where a central opening/cylinder boss surrounds a conical top of a male post. No discs can be stored in this aforementioned region.

One object of the present invention is to provide more space efficient storage of discs. Another object is to provide a simple container. Other objects are indicated in the accompanying text and figures.

The system according to the invention comprises a container and guiding means, said container being adapted for holding a stack of discs, said discs including a type such as CDs, DVDs, or similar information storing devices or recordable devices etc., and said container comprising an upwardly extending post having a cross section substantially conforming to central openings formed in said discs, said post comprising an upwardly positioned receiving end, characterised in that the guiding means is detachably connected to the receiving end of the post as well as includes a generally tapered design adapted for guidance of discs onto said post in a loading situation.

It has been realised that by implementing a guiding means, which is detachably connected to the post, the guiding means may perform the desired function in a loading situation, but may at a suitable instance be detached before the container is sealed. When the guiding means is detached, a seal or lid may be placed very close to or in contact with the stack of discs, whereby loss of space is essentially avoided or at least significantly reduced.

In one preferred embodiment the guiding means may be adapted to be detached by being broken off. This is convenient and simple. The guiding means may e.g. be cast along with the post and may be discarded or recycled after use.

In another preferred embodiment the guiding means may comprise a pin which comprises a first and a second section, said first section substantially conforming to the cross section of the post, where the second section and the receiving end of the post are mutually adapted for being temporarily engaged. Such a pin or several similar pins may be used again and again. The application and detachment of such a pin may be done manually or automatically.

In a further preferred embodiment, the receiving end of the post may include an annular groove, and the pin is adapted to be received in said annular groove. This provides a simple design, which may be manufactured at a low cost, and where the pin is easily and securely attached to the receiving end of the post.

In yet another preferred embodiment, the guiding means may comprise an upper section narrowing away from the first section, preferably comprising a conical, frusto-conical or rounded surface. This ensures the guiding function of the guiding means, so that discs arriving to the guiding means, which are randomly being slightly out of correct position will be caught by the narrowing upper section.

The container according to the invention may preferably comprise a base member having a surface from which the post is extending, said base member having a larger extent than the discs. The base member is suited for receiving and neighbouring a first disc, such that the bottom of the stack of discs is well protected from bumps and bruises. Also, it is preferred that the container may comprise a lid, said lid and the base member being adapted for mutual engagement, and where the base member may comprise at least one wall extending upwards, or the lid may comprise at least one wall portion extending downwards. The whole stack may hereby be completely surrounded and hence guarded in total.

Further, the lid may be arranged to, when engaged with the base member, being placed adjacent to or in contact with the receiving end of the post. The lid hereby locks the stack on the post and as little space as possible is consumed by the lid.

The method according to the invention involves providing a container with a stack of discs, said container being adapted for holding a stack of discs, said discs including a type such as CDs, DVDs, or similar information storing devices or recordable devices etc., and said container comprising an upwardly extending post having a cross section substantially conforming to central openings formed in said discs, said post comprising an upwardly positioned receiving end, where at least one guiding means is detachably connected to the receiving end of the post, said guiding means including a generally tapered design adapted for guidance of discs onto said post in a loading situation, where the method comprises steps of:
- guiding a predetermined number of discs onto the post to form a stack,
- detaching the guiding means, and
- closing the container, e.g. with a lid.

This method ensures easy and secure loading of the discs and at the same time ensures that the total assembly consumes a minimum of space.

In performing the method, the receiving end of the post may preferably include an annular groove, where the guiding means is engaged with said groove to be connected to the post prior to the step of guiding a predetermined number of discs onto the post to form a stack. The pin is hereby easily and securely attached to the receiving end of the post before the loading procedure is commenced.

Preferably the discs may by the method be printed on a printing machine and fall directly from the machine onto the post while being guided by the guiding means. Additional handling is hereby avoided, whereby the quality of the discs and/or the print is improved. By additional handling there is always a risk of degrading quality, especially by manual handling but also by automatic handling, since the discs have to be transported, gripped, etc.

The invention further includes a container and preferred embodiments of such a container, which are the subjects of claims 11-14.

List of figures
- Fig. 1: shows a side view of a cross section of a container
- Fig. 2: shows a sectional side view of a cross section of a post by the receiving end
- Fig. 3: shows a sectional side view of a cross section of a guiding means, here a pin
- Fig. 4a-b: show side views of attachment of a pin with a receiving end of a post
- Fig. 5: shows a side view of a discs being loaded onto a container with a detachable pin

The figures display examples of the features and embodiments of the invention. The figures may only be understood as being exemplary and explanatory.

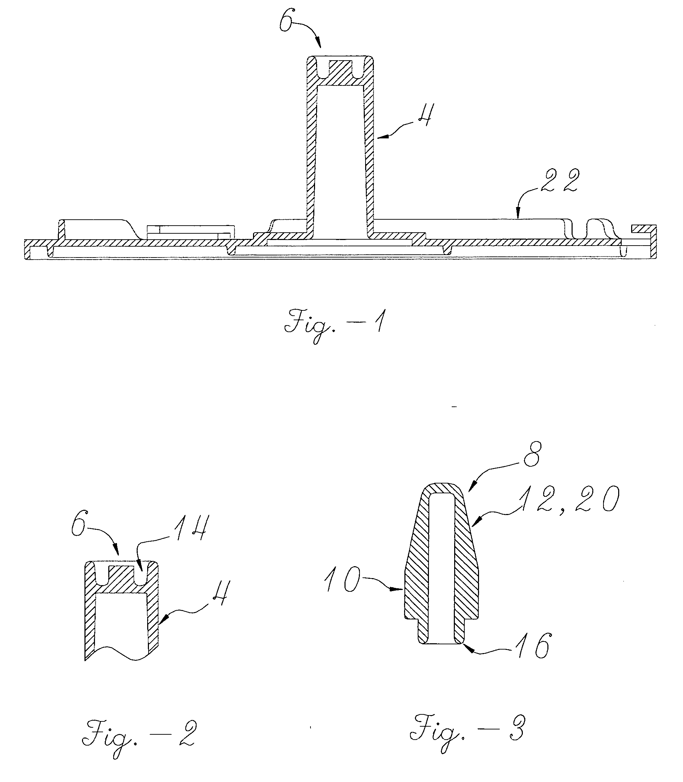

Fig. 1 displays a post 4 extending upwards and having a receiving end 6. The post is designed to receive a stack of discs having substantially central openings. The length of the post 4 is adapted to the number of discs desired to be held in a stack, i.e. the height of the stack. A base member 22 is arranged at the bottom of the post 4. The post 4 is attached to the base member 22, whereby the base member 22 will act as a stop for discs being loaded onto the post 4. On Fig. 2 is displayed that the receiving end 6 of the post 4 may have an annular groove 14, which is adapted to receive and interact with a guiding means in a detachable manner, such as e.g. a press-fit.

An example of such guiding means 8 is shown in Fig. 3. A pin is having a first section 10 substantially conforming to the cross section of a post 4 (Fig. 2) and a second section 16, which is adapted for being temporarily and detachably engaged with a receiving end of a post. The pin is shown with an upper section 12 having a frusto-conical surface 20, which is suitable for guiding discs.

Figs. 4a, 4b display a guiding means 8 having a protruding section 16 and a post 4 comprising an annular groove 14, which are adapted for mutual engagement as shown in Fig. 4b. The cross section of the first section 10 is conforming to the cross section of the post 4, so as to provide a smooth transition between the guiding means 8 and the post 4. Other ways of making a detachable connection between the guiding means 8 and the post 4 are of course possible, such as e.g. the way toy plastic building bricks are assembled. Preferably, the design of the detachable connection is done in such a way that the post 4 may keep its outer contour over its full height, since it may then hold discs over it full height.

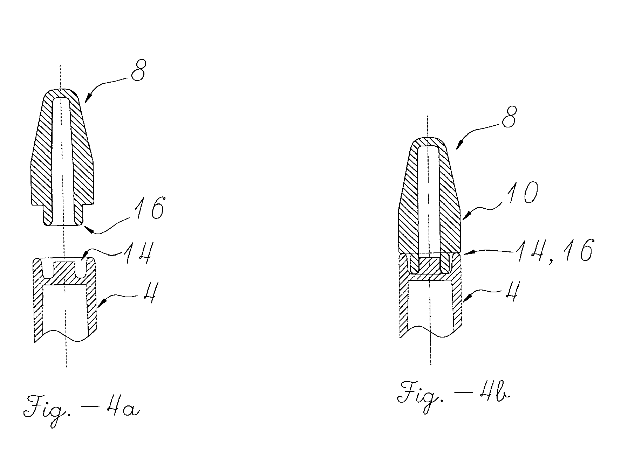

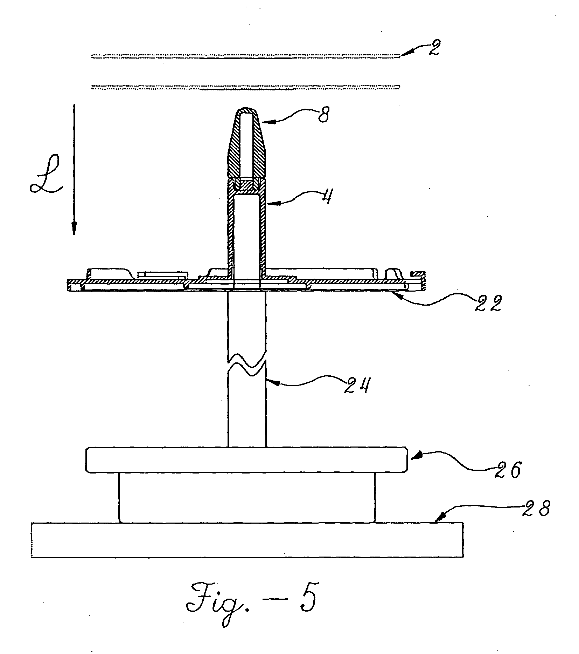

Fig. 5 displays a post 4 and a base member 22 placed on a locator pin 24, which is attached to a fixture base 26. The fixture base 26 rests on a machine conveyor, which may be arranged in connection to a printing machine. A guiding means 8 is connected to the post 4, so that discs 2 may be received in the loading direction L. Preferably there is loaded a number of discs corresponding to the length of the post 4. After loading is finished, the guiding means 8 is disengaged, whereafter a not shown lid may be attached e.g. to the base member 22.

The post 4 and the base member 22 may be made from polypropylene or polystyrene, but a wide variety of materials would be suitable. The guiding means 8 may also be made in a plastic material or in metal such as steel.

It may be noted that neither the post 4 nor the guiding means 8 need to have full 360 degrees contours, such as being cylindrical. Other possibilities such as an x-shape, rectangular or triangular shape in a horizontal cross section could also be used. The only criterion is that sufficient contour is present for the discs to be suitably guided during loading as well as kept in place during storage.

It should be understood that the shown and described embodiments are susceptible of changes and modifications without departing from scope of the invention. Any such changes and modifications will fall within the ambit of the appended claims.

## Claims

1. A system comprising a container and guiding means (8), said container being adapted for holding a stack of discs (2), said discs including a type such as CDs, DVDs, or similar information storing devices or recordable devices etc., and said container comprising an upwardly extending post (4) having a cross section substantially conforming to central openings formed in said discs, said post comprising an upwardly positioned receiving end (6), **characterised in that** the guiding means is detachably connected to the receiving end of the post as well as includes a generally tapered design adapted for guidance of discs onto said post in a loading situation.

2. A system according to claim 1, where the guiding means (8) is adapted to be detached by being broken off.

3. A system according to claim 1, where the guiding means (8) comprises a pin which comprises a first and a second section, said first section (10) substantially conforming to the cross section of the post (4), where second section (16) and the receiving end (6) of the post are mutually adapted for being temporarily engaged.

4. A system according to claim 3, where the receiving end (6) of the post includes an annular groove (14), and where the pin is adapted to be received in said annular groove.

5. A system according to any of claims 1-4, where the guiding means (8) comprises an upper section (12) narrowing away from the first section, preferably comprising a conical, frusto-conical or rounded surface (20).

6. A system according to any of claims 1-5, where the container comprises a base member (22) having a surface from which the post (4) is extending, said base member having a larger extent than the discs.

7. A system according to claim 6, where the container comprises a lid, said lid and the base member (22) being adapted for mutual engagement, and where the base member comprises at least one wall extending upwards or where the lid comprises at least one wall portion extending downwards.

8. A system according to claim 7, where the lid is arranged to, when engaged with the base member, being placed adjacent to or in contact with the receiving end (6) of the post.

9. A method of providing a container with a stack of discs (2), said container being adapted for holding a stack of discs, said discs including a type such as CDs, DVDs, or similar information storing devices or recordable devices etc., and said container comprising an upwardly extending post (4) having a cross section substantially conforming to central openings formed in said discs, said post comprising an upwardly positioned receiving end (6), where at least one guiding means (8) is detachably connected to the receiving end of the post, said guiding means including a generally tapered design adapted for guidance of discs onto said post in a loading situation, where the method comprises steps of:
- guiding a predetermined number of discs onto the post to form a stack,
- detaching the guiding means, and
- closing the container, e.g. with a lid.

10. A method according to claim 9, where the receiving end of the post (6) includes an annular groove (14), and where the guiding means is engaged with said groove to be connected to the post prior to the step of guiding a predetermined number of discs onto the post to form a stack.

11. A method according to claim 9 or 10, where the discs are printed on a printing machine and falls directly from the machine onto the post (4) while being guided by the guiding means (8).

12. A container adapted for holding a stack of discs (2), said discs including a type such as CDs, DVDs, or similar information storing devices or recordable devices etc., and said container comprising an upwardly extending post (4) having a cross section substantially conforming to central openings formed in said discs, said post comprising an upwardly positioned receiving end (6), said receiving end being adapted to temporarily receive and engage at least one guiding means (8) for guidance of discs onto said post in a loading situation.

13. A container according to claim 12, where the receiving end (6) of the post includes an annular groove (14).

14. A container according to claim 12 or 13, where the container comprises a stack of discs.
